# EUROPEAN PATENT SPECIFICATION

(11) **EP 4 282 987 B1**
(45) Date of publication and mention of the grant of the patent: **04.11.2026**
(21) Application number: 21933311.9
(22) Date of filing: 27.12.2021
(51) Int. Cl.: C21B 5/00, C21B 7/14, C21B 7/24, F27D 21/00, F27D 21/02, F27D 21/04

(54) **METHOD FOR DETECTING HEIGHT OF MOLTEN MATERIAL**
VERFAHREN ZUR HÖHENBESTIMMUNG VON GESCHMOLZENEM MATERIAL
PROCÉDÉ DE DÉTECTION DE LA HAUTEUR D'UN MATÉRIAU FONDU

(30) Priority: 26.03.2021 JP 2021052876
(43) Date of publication of application: 29.11.2023
(73) Proprietor: JFE Steel Corporation, Tokyo 100-0011 (JP)
(72) Inventor: MATSUNAGA Ryotaro, Tokyo 100-0011 (JP); MORIYA Kota, Tokyo 100-0011 (JP); ICHIKAWA Kazuhira, Tokyo 100-0011 (JP)
(74) Representative: Hoffmann Eitle
(86) International application number: PCT/JP2021/048667
(87) International publication number: WO 2022/201721

(56) References cited:
- JP-A- 2003 155 507
- JP-A- 2015 206 107
- BORTHAKUR MANASH PRATIM ET AL: "Dynamics of an arched liquid jet under the influence of gravity", EUROPEAN JOURNAL OF MECHANICS B. FLUIDS., vol. 74, 1 March 2019 (2019-03-01), FR, pages 1 - 9, XP093181782, ISSN: 0997-7546, DOI: 10.1016/j.euromechflu.2018.11.002
- NISHIOKA KOKI, TAKAYUKI MAEDA, MASAKATA SHIMIZU: "A Three-dimensional Mathematical Modelling of Drainage Behavior in Blast Furnace Hearth", ISIJ INTERNATIONAL, vol. 45, no. 5, 15 May 2005 (2005-05-15), pages 669 - 676, XP055970108

## Description

### Technical Field

The present invention relates to a molten-material-height detection method for detecting a molten-material-height in a smelting furnace.

### Background Art

A blast furnace is one of smelting furnaces whose insides cannot be directly observed. The blast furnace is a smelting furnace that produces molten iron by charging iron-rich ore and coke through a furnace top and blowing mixture gas of air, pure oxygen, and the like through a lower portion of the furnace. Produced molten iron slag is accumulated in a bottom portion of the blast furnace, and the molten iron slag is discharged out of the furnace through a hole called a taphole before reaching equipment incidental to the blast furnace. In a case where such a production method is performed, it is required to stably operate the blast furnace without a trouble in order to accomplish a planned production amount.

However, molten iron slag is sometimes excessively accumulated in the bottom portion of the blast furnace due to a failure of equipment for opening a taphole, deterioration of fluidity of molten iron slag, or the like. This narrows a gas flowing region and thereby deteriorates gas permeability or causes blockage of a tuyere with molten slag. In the worst case scenario, production needs to be stopped. It is therefore necessary to grasp a molten-material-height for stable operation of a smelting furnace.

There are techniques for grasping a molten-material-height in a smelting furnace. For example, Patent Literature 1 discloses taking two or more images of a pattern of a surface of molten material discharged through a discharge hole of a smelting furnace in a short time, calculating a discharge speed of the molten material from a change of the pattern, and then calculating a molten-material-height from the discharge speed and a pressure in the furnace.

### Citation List

### Patent Literature

PTL 1: Japanese Unexamined Patent Application Publication No. 2017-160498

### Non Patent Literature

NPL 1: Takashi SUGIYAMA and other three, "Analysis on Liquid Flow in the Dripping Zone of Blast Furnace", Tetsu-to-Hagane, Vol. 73 (1987), No. 15, pp. 2044-2051
NPL 2: Masaki SAWAMOTO, "Nagare-No-Rikigaku (hydrodynamics)", KYORITSU SHUPPAN CO., LTD., 2005 edition, pp. 58-59
Further related art may be found in BORTHAKUR MANASH PRATIM ET AL: "Dynamics of an arched liquid jet under the influence of gravity", EUROPEAN JOURNAL OF MECHANICS B. FLUIDS., vol. 74, 1 March 2019, pages 1-9.

### Summary of Invention

### Technical Problem

However, molten material flowing through the discharge hole receives resistance of an inner wall of the discharge hole, and therefore a speed of molten material flowing in contact with the inner wall is lower than a speed of molten material flowing at a center of the discharge hole. Accordingly, a speed of outer molten material flowing in contact with the inner wall of the discharge hole when discharged through the discharge hole is lower than a speed of inner molten material flowing at the center of the discharge hole. Since a pattern on an outer portion of molten material discharged through the discharge hole is imaged, a tapping speed of the molten material calculated by the imaging is lower than an actual discharge speed. As just described, according to the method disclosed in Patent Literature 1, an accurate discharge speed of molten material cannot be found, and therefore accuracy of calculation of a molten-material-height calculated from the discharge speed is low. The present invention was accomplished in view of such a problem of the conventional art, and an object of the present invention is to provide a molten-material-height detection method that can accurately measure a discharge speed of molten material and detect a molten-material-height with high accuracy.

### Solution to Problem.

The present invention is defined by appended independent claim 1. The dependent claims describe optional features and distinct embodiments.

### Advantageous Effects of Invention

According to the molten-material-height detection method according to the present invention, a discharge speed of molten material discharged through a discharge hole is calculated by using a discharge distance of the molten material, a height of the discharge hole, and a discharge angle of the molten material. This makes it possible to calculate the discharge speed of the molten material more accurately than a method for calculating the discharge speed of the molten material by imaging. By detecting a molten-material-height by using the discharge speed of the molten material thus calculated, the molten-material-height can be detected with high accuracy.

### Brief Description of Drawings

[Fig. 1] Fig. 1 is a partial cross-sectional view of a lower portion of a blast furnace 10.
[Fig. 2] Fig. 2 is a schematic view illustrating a situation where molten material 12 is discharged through a taphole 14.
[Fig. 3] Fig. 3 is a cross-sectional schematic view of the taphole 14 through which the molten material 12 passes.
[Fig. 4] Fig. 4 illustrates images of discharge flows of Invention Example 1 and Invention Example 2.
[Fig. 5] Fig. 5 is a graph illustrating a result of detection of molten-material-heights H in Invention Example 1 and Invention Example 2.
[Fig. 6] Fig. 6 is a graph illustrating a temporal change of molten iron slag balance.

### Description of Embodiments

The present invention is described below on the basis of an embodiment of the invention. In the present embodiment, a blast furnace is used as a smelting furnace, and an embodiment of a molten-material-height detection method for detecting a molten-material-height in the blast furnace is described. However, the molten-material-height detection method according to the present invention is applicable not only to a blast furnace, but also to any smelting furnace having, in a lower portion thereof, a discharge hole through which molten material is discharged out of the furnace.

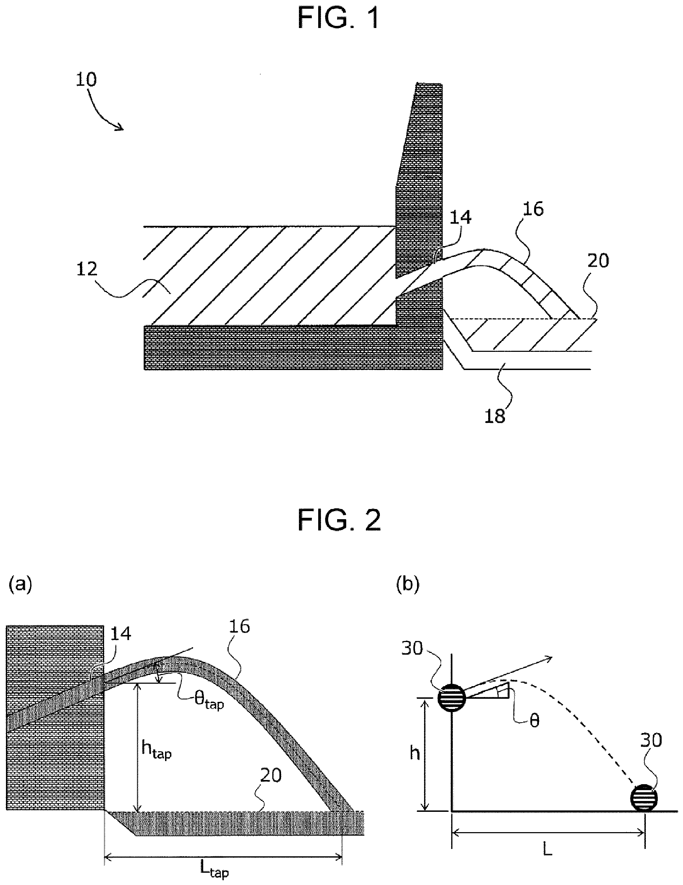

According to the molten-material-height detection method according to the present embodiment, a discharge speed of molten material discharged out of the furnace through a discharge hole is calculated, and a height of molten material accumulated in a lower portion of the blast furnace is detected by using the discharge speed. First, a method for calculating a discharge speed of molten material discharged out of the furnace through the discharge hole is described with reference to Figs. 1 to 3.

Fig. 1 is a partial cross-sectional view of a lower portion of a blast furnace 10. The blast furnace 10 has, in a lower portion thereof, plural tapholes 14 through which molten material 12 accumulated in the lower portion is discharged. The molten material 12 is molten iron, molten slag, or a mixture thereof existing as a liquid in the furnace. The molten material 12 is discharged out of the furnace through any of the tapholes 14 to become a parabolic discharge flow 16 and then falls onto a liquid surface 20 of the molten material 12 in a runner 18. In the present embodiment, the taphole 14 is an example of a discharge hole through which the molten material 12 accumulated in the lower portion of the furnace is discharged out of the furnace.

Fig. 2 is a schematic view illustrating a situation where the molten material 12 is discharged through the taphole 14. According to the molten-material-height detection method according to the present embodiment, a discharge speed of the molten material 12 is calculated by using a discharge distance Lₜₐₚ of the molten material 12, a height hₜₐₚ of the taphole 14, and a discharge angle θₜₐₚ of the molten material 12 illustrated in Fig. 2(a). The discharge distance Lₜₐₚ of the molten material 12 is a distance from a position where the molten material 12 is discharged through the taphole 14 to a position where the discharged molten material 12 falls onto a liquid surface of the molten material 12. The discharge distance Lₜₐₚ can be, for example, measured by using an image obtained by imaging the discharge flow 16 together with a subject used as a standard of length.

The height hₜₐₚ of the taphole 14 is a height from a center of the taphole 14 to the liquid surface 20 onto which the molten material 12 falls. The height from the center of the taphole 14 to the liquid surface 20 onto which the molten material 12 falls may be measured by using an image obtained by imaging the discharge flow 16 together with a subject used as a standard of length or may be a design value of the taphole 14. Note that a center position of the taphole 14 changes since a refractory is eroded as the molten material 12 is discharged through the taphole 14. Furthermore, a height of the liquid surface 20 may also change. It is therefore preferable to measure the height from the center of the taphole 14 to the liquid surface 20 onto which the molten material 12 falls by using an image obtained by imaging the discharge flow 16.

The discharge angle θₜₐₚ of the molten material 12 is an angle formed between the discharge flow 16 formed when the molten material 12 is discharged through the taphole 14 and a horizontal plane. The discharge angle θₜₐₚ may be measured by using an image obtained by imaging the discharge flow 16 or may be identical to a design value of an inclination angle of a central axis of the taphole 14 with respect to a horizontal plane. That is, the height hₜₐₚ of the taphole 14 and the discharge angle θₜₐₚ of the molten material 12 need not necessarily be measured.

Fig. 2(b) illustrates how an object 30 that has been thrown obliquely moves in a parabolic trajectory. For example, assume that the object 30 is thrown obliquely from a height h at a throwing angle θ and lands after flying by a flying distance L, as illustrated in Fig. 2(b). Since only gravity acts on the object 30, an equation of motion of the object 30 is expressed by the following formulas (1) and (2) where x is a left-right direction and z is an up-down direction.
[Math. 1] $m \times \frac{{dv}_{x}}{dt} = 0$ (1)
[Math. 2] $m \times \frac{{dv}_{z}}{dt} = - m \times g$ (2)

In the above formula (1), vₓ is an initial velocity (m/s) in the x direction, and in the formula (2), v_{z} is an initial velocity (m/s) in the z direction. Furthermore, m is mass (kg) of the object 30, and g is a gravitational acceleration (9.8 m/s²).

First, a moving distance in the z direction is studied. Assume that a period from a time when the object 30 is thrown to a time when the object 30 lands is Δt seconds, the object 30 falls by the height h in Δt seconds. Therefore, the following formula (3) is established as for the moving distance in the z direction.
[Math. 3] $- h = - \frac{1}{2} \times g \times {\left(Δt\right)}^{2} + {v}^{ini} \times sinθ \times Δt$ (3)

In the above formula (3), vⁱⁿⁱ is an initial velocity (m/s) of the object 30, θ is a throwing angle (rad), and h is the height (m). In the second term of the right-hand side of the formula (3), an initial velocity in the z direction is multiplied by Δt.

Next, a moving distance in the x direction is studied. Since no force acts in the x direction in the case of oblique throwing, an initial velocity in the x direction is maintained until landing. Accordingly, assume that a period from a time when the object 30 is thrown to a time when the object 30 lands is Δt, the object 30 moves by the flight distance L in Δt seconds. Therefore, the following formula (4) is established as for the moving distance in the x direction.
[Math. 4] $L = {v}^{ini} \times cosθ \times Δt$ (4)

In the above formula (4), L is a flight distance (M) of the object 30 in the x direction. vⁱⁿⁱ is an initial velocity (m/s) of the object 30, and θ is a throwing angle (rad) .

The following formula (5) concerning the initial velocity vⁱⁿⁱ of the object 30 is derived from the above formulas (3) and (4). Note that a standard of the height h is a landing position of the object 30 in the following formula (5).
[Math. 5] ${V}^{ini} = \sqrt{\frac{g \times {L}^{2}}{2 \times {cos}^{2} θ \times \left(L\times tanθ+h\right)}}$ (5)

When the above formula (5) is applied to calculation of the discharge speed Vₜₐₚ of the molten material 12, Vⁱⁿⁱ is the discharge speed Vₜₐₚ (m/s) of the molten material 12, L is the discharge distance Lₜₐₚ (m) of the molten material 12, h is the height hₜₐₚ (m) of the taphole 14, and θ is the discharge angle θₜₐₚ (rad) of the molten material 12. Therefore, the discharge speed of the molten material 12 can be calculated by using the above formula (5), the discharge distance Lₜₐₚ of the molten material 12, the height hₜₐₚ of the taphole 14, and the discharge angle θₜₐₚ of the molten material 12. That is, this is a method for estimating a speed of molten material by imaging a shape of a discharge flow and combining the imaged shape with an estimating formula based on mechanics, and this makes it possible to reduce an error of speed measurement resulting from resistance of an inner wall of a taphole and accurately calculate a discharge speed of molten material.

Next, a method for detecting a height of the molten material 12 from the discharge speed Vₜₐₚ is described. According to the molten-material-height detection method according to the invention, the height of the molten material 12 is calculated by using the discharge speed Vₜₐₚ of the molten material 12 and the following formula (6).
[Math. 6] $\left(\frac{1}{2}\times {ρ}_{l}\times {{v}_{tap}}^{2}+{P}_{1}+{ρ}_{l}\times g\times H\right) - \left(\frac{1}{2}\times {ρ}_{l}\times {{v}_{tap}}^{2}+{P}_{2}+{ρ}_{l}\times g\times {h}_{tap}\right) = 0$ (6)

In the above formula (6), ρₗ is a density (kg/m³) of the molten material 12, vₜₐₚ is the discharge speed (m/s) of the molten material 12, P₁ is a gas pressure (Pa) in the furnace, g is a gravitational acceleration (9.8 m/s²), H is a height (m) of the molten material 12 accumulated in the lower portion of the furnace, P₂ is a gas pressure (Pa) at an exit of the taphole 14, and hₜₐₚ is the height (m) of the taphole 14.

The density ρₗ of the molten material 12 may be a value of a past record. In a case where the molten material 12 includes molten iron slag, the density ρₗ of the molten material 12 can be calculated by combining a molten iron density and a molten slag density in a mixture ratio thereof. The discharge speed vₜₐₚ of the molten material 12 is vⁱⁿⁱ calculated by the above formula (5). The gas pressure P₁ in the furnace is found from a measurement value of a pressure meter mounted in the lower portion of the blast furnace 10. The gas pressure P₂ at the exit of the taphole 14 may be an atmospheric pressure. A reference level for the height H of the molten material 12 and the height hₜₐₚ of the taphole 14 in the above formula (6) is a bottom position of the blast furnace 10.

The first term in the left-hand side of the above formula (6) is a term representing mechanical energy of the molten material 12 accumulated in the lower portion of the blast furnace 10. The second term of the left-hand side of the above formula (6) is a term representing mechanical energy of the molten material 12 that has just been discharged through the taphole 14. Note that a term of kinetic energy of the molten material 12 accumulated in the lower portion of the furnace is sufficiently smaller than the other terms and therefore may be ignored. The above formula (6) is a formula showing that these types of mechanical energy are equal (a difference between the first term and the second term is 0), and the height H of the molten material 12 accumulated in the lower portion of the furnace can be detected by using the formula (6).

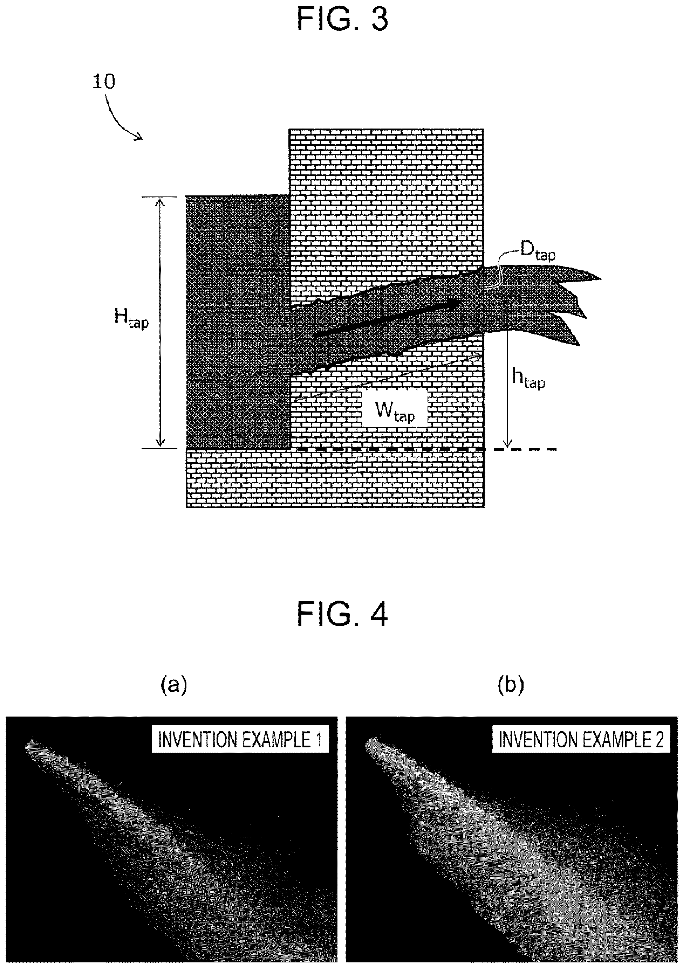

Fig. 3 is a cross-sectional schematic view of the taphole 14 through which the molten material 12 passes. The molten material 12 receives resistance force from the taphole 14 when the molten material 12 accumulated in the lower portion of the blast furnace 10 is discharged out of the furnace. It is therefore preferable to calculate the height H of the molten material 12 by using the following formula (7) taking into consideration influence of the resistance force in the above formula (6).
[Math. 7] $\begin{matrix}\left(\frac{1}{2}\times {ρ}_{l}\times {{v}_{tap}}^{2}+{P}_{1}+{ρ}_{l}\times g\times H\right) - \left(\frac{1}{2}\times {ρ}_{l}\times {{v}_{tap}}^{2}+{P}_{2}+{ρ}_{l}\times g\times {h}_{tap}\right) \\ = \left(\frac{1}{2}\times {f}_{tap}\times \frac{{W}_{tap}}{{D}_{tap}}\times {ρ}_{l}\times {{v}_{tap}}^{2}\right) + \left(\frac{1}{2}\times Ke\times {ρ}_{l}\times {{v}_{tap}}^{2}\right)\end{matrix}$ (7)

In the above formula (7), fₜₐₚ is a coefficient of pipe friction (-) of the taphole 14, Wₜₐₚ is a length (m) of the taphole 14, Dₜₐₚ is an inner diameter (m) of the taphole 14, and Ke is an entrance loss coefficient for pipe (-). Note that (-) means being dimensionless.

The length Wₜₐₚ of the taphole 14 is found from a length of intrusion of a drill for formation of the taphole 14. The inner diameter Dₜₐₚ of the taphole 14 is found from a diameter of a drill used to form the taphole 14. The coefficient of pipe friction fₜₐₚ of the taphole 14 can be calculated by the Swamee-Jain equation indicated by the following formula (8).
[Math. 8] ${f}_{tap} = 4 \times \frac{0.0626}{{\left[log\left(\frac{{e}_{tap}}{3.7 \times {D}_{tap}}+\frac{5.74}{{Re}^{0.9}}\right)\right]}^{2}}$ (8)

In the above formula (8), eₜₐₚ is taphole surface roughness (m), Dₜₐₚ is the inner diameter (m) of the taphole 14, and Re is a Reynolds number (-) of a fluid flowing through the taphole 14.

Although the taphole surface roughness eₜₐₚ varies depending on a hole opening method, a taphole mix, an elapsed period from start of tapping, or the like, it has been confirmed from operation analysis that it is appropriate to use a value within a range of 0.0001 m to 0.01 m. The Reynolds number Re can be calculated by the following formula (9).
[Math. 9] $Re = \frac{{ρ}_{1} \times {v}_{tap} \times {D}_{tap}}{μ}$ (9)

In the above formula (9), µ is viscosity (Pa·s) of the molten material 12. The viscosity µ of the molten material 12 is calculated by combining viscosity of the molten iron and viscosity of the slag in a mixture ratio thereof. The viscosity of the molten iron and the viscosity of the molten slag may be values of past records or the viscosity of the molten slag may be estimated by a method described in Non Patent Literature 1 for estimating viscosity from concentrations of components such as CaO, MgO, Al₂O₃, SiO₂, and FeO and a temperature.

The entrance loss coefficient for pipe Ke can be calculated by using the following formula (10) described in Non Patent Literature 2.
[Math. 10] $Ke = 0.5 + 0.3 \times sin \left({θ}_{tap}\right) + 0.2 \times {sin}^{2} \left({θ}_{tap}\right)$ (10)

In the above formula (10), θₜₐₚ is the discharge angle (rad) of the molten material 12.

As described above, according to the molten-material-height detection method according to the present embodiment, the discharge speed vₜₐₚ of the molten material 12 discharged out of the furnace through the taphole 14 is calculated by using the discharge distance Lₜₐₚ of the molten material 12 discharged through the taphole, the height hₜₐₚ of the taphole 14, and the discharge angle θₜₐₚ of the molten material 12. This makes it possible to calculate the discharge speed vₜₐₚ of the molten material 12 more accurately than the method for finding the discharge speed of the molten material 12 by imaging a pattern on the molten material 12.

Then, the height H of the molten material 12 is calculated by using the calculated discharge speed vₜₐₚ of the molten material 12 and the above formula (6) showing that the mechanical energy of the molten material 12 accumulated in the lower portion of the furnace and the mechanical energy of the molten material 12 that has just been discharged out of the furnace through the taphole 14 are equal. According to the molten-material-height detection method according to the present embodiment, the height H of the molten material 12 is calculated by using the discharge speed vₜₐₚ of the molten material 12 that is calculated more accurately than the method for finding the discharge speed of the molten material 12 by imaging a pattern on the molten material 12, and therefore accuracy of detection of the height H of the molten material 12 also improves.

Furthermore, it is preferable to use the above formula (7) taking into consideration resistance force which the molten material 12 receives from the taphole 14 instead of the above formula (6) in a case where the height H of the molten material 12 is detected. This can achieve a further improvement in accuracy of detection of the height H of the molten material 12.

### Example

Next, Example in which adequacy of the molten-material-height detection method according to the present embodiment was examined by using a large-size blast furnace having a capacity of approximately 5000 m³ is described. In the present Example, a discharge flow of molten material immediately after hole opening was imaged, and a discharge distance Lₜₐₚ and a height hₜₐₚ of a taphole were measured from an image generated by the imaging. The discharge flow was imaged by using a video camera whose operation guaranteed temperature is 70°C and that can acquire image data of an image size of 2064 × 1544. In the present Example, the discharge flow was imaged two times at different times by using the video camera. Example in which the discharge speed vₜₐₚ and the molten-material-height H were detected from an image obtained by the first imaging is referred to as Invention Example 1, and Example in which the discharge speed vₜₐₚ and the molten-material-height H were detected from an image obtained by the second imaging is referred to as Invention Example 2.

Fig. 4 illustrates images of discharge flows of Invention Example 1 and Invention Example 2. Fig. 4(a) illustrates an image of a discharge flow of Invention Example 1, and Fig. 4(b) illustrates an image of a discharge flow of Invention Example 2. As illustrated in Figs. 4(a) and 4(b), a surface portion of each of the discharge flows, that is, a boundary plane between the discharge flow and ambient air is not a smooth surface but is an irregular wave-like shape. This indicates that the surface portion of the discharge flow receives strong viscous resistance from an inner wall of a discharge hole and ambient air and therefore the discharge flow is disturbed only in the vicinity of a surface layer of the discharge flow. It has been confirmed that the calculation method according to the present invention is superior in accuracy, for example, to a conventional method of estimating a flow rate from a positional change in an image since a flow rate of the discharge flow in the vicinity of the surface layer irregularly fluctuates due to the disturbed flow. In Invention Example 1 and Invention Example 2, the discharge distance Lₜₐₚ and the height hₜₐₚ of the taphole were measured from the images, and the discharge speed vₜₐₚ was calculated by using the discharge distance Lₜₐₚ and the height hₜₐₚ of the taphole. Table 1 below shows measurement results of the discharge distance Lₜₐₚ and the height hₜₐₚ of the taphole, the inclination angle θₜₐₚ of the taphole, and the discharge speed vₜₐₚ.

**[Table 1]**

| | | Invention Example 1 | Invention Example 2 |
|---|---|---|---|
| Discharge distance (Lₜₐₚ) | (m) | 2.5 | 2.2 |
| Taphole height (hₜₐₚ) | (m) | 0.6 | 0.3 |
| Taphole inclination angle (θₜₐₚ) | (°) | 7 | 7 |
| Discharge speed (vₜₐₚ) | (m/s) | 5.86 | 6.50 |

Furthermore, the molten-material-heights H in Invention Example 1 and Invention Example 2 were calculated by using the discharge speed vₜₐₚ. Table 2 below shows parameters used to calculate the molten-material-heights H.

**[Table 2]**

| | | Invention Example 1 | Invention Example 2 |
|---|---|---|---|
| Tapping speed | (m/s) | 5.86 | 6.50 |
| Pressure in furnace (lower portion of furnace) | (Pa) | 4.56×10⁵ | |
| Atmospheric pressure | (Pa) | 1.01×10⁵ | |
| Taphole diameter | (m) | 0.065 | |
| Taphole surface roughness | (m) | 0.001 | |
| Taphole length | (m) | 3.8 | 3.7 |
| Molten iron density | (kg/m³) | 6700 | |
| Molten slag density | (kg/m³) | 2650 | |
| Molten iron viscosity | (Pa·s) | 0.006 | |
| Molten slag viscosity | (Pa·s) | 0.435 | |
| Molten iron volume ratio | (molten iron/ molten iron + slag) | 0.41 | 0.42 |

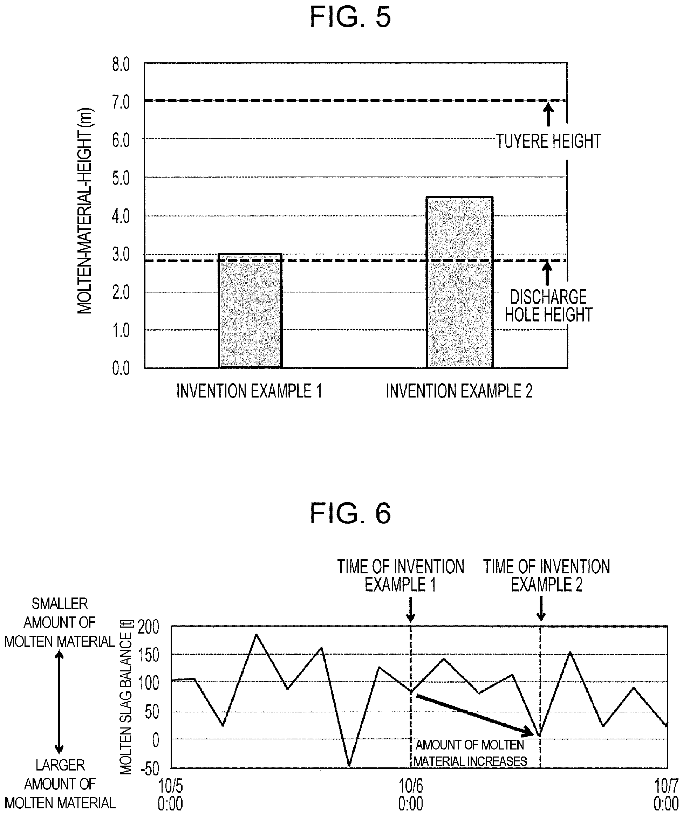

Fig. 5 is a graph illustrating a result of detection of the molten-material-heights H in Invention Example 1 and Invention Example 2. Both of the molten-material-height H detected in Invention Example 1 and the molten-material-height H detected in Invention Example 2 were between the height of the taphole and a tuyere height. The molten-material-height H detected in Invention Example 2, in which the discharge speed was higher than that in Invention Example 1, was higher than that in Invention Example 1.

Next, adequacy of the calculation result of the molten-material-height H illustrated in Fig. 5 was examined by using molten iron slag balance, which is blast furnace operation data. The molten iron slag balance means a value obtained by subtracting an amount of generated molten iron slag from an amount of tapped molten iron slag in terms of volume. molten iron slag balance 0 means that the amount of tapped molten iron slag and the amount of generated molten iron slag are equal. molten iron slag balance larger than 0 means that the amount of tapped molten iron slag is larger than the amount of generated molten iron slag, and therefore an amount of molten material accumulated in a lower portion of a furnace decreases, and the molten-material-height H decreases accordingly. On the other hand, molten iron slag balance smaller than 0 means that the amount of tapped molten iron slag is smaller than the amount of generated molten iron slag, and therefore an amount of molten material accumulated in a lower portion of a furnace increases, and the molten-material-height H increases accordingly.

The amount of generated molten iron slag was calculated from an oxygen budget of the blast furnace per unit time, a proportion of oxygen contained in iron oxide in raw materials charged through a furnace top, and a proportion of gangue in the charged raw materials. Specifically, an amount of generated molten iron was calculated by using the following formula (11), and an amount of generated molten slag was calculated by using the following formula (12), and an amount of generated molten iron slag was calculated by summing up these amounts.${W}_{p} = \left({N}_{top}-{N}_{tuy}\right) \times \left({R}_{Fe / O}\right) \times {M}_{Fe} \div {R}_{FeHM}$ (11) ${W}_{s} = {W}_{p} \times {R}_{G / Fe}$ (12)

In the above formulas (11) and (12), Wₚ is the amount of generated molten iron (t/time), and Wₛ is the amount of generated molten slag (t/time). Nₜₒₚ is an amount of substance (mol/time) of oxygen atoms in furnace top gas per time, N_{tuy} is an amount of substance (mol/time) of oxygen atoms blown through a tuyere per time, R_{Fe/O} is an average number (-) of iron atoms per oxygen atom in iron oxide in the raw materials charged through the furnace top, M_{Fe} is molar mass (t/mol) of iron, R_{FeHM} is a mass fraction (-) of iron in molten iron, and R_{G/Fe} is mass (t/molten iron) of charged gangue per 1 t of molten iron.

Nₜₒₚ is found by component analysis of furnace top gas. N_{tuy} is found by component analysis of gas blown through the tuyere. R_{Fe/O} and R_{G/Fe} are found by component analysis of the raw materials charged through the furnace top. R_{FeHM} is found by component analysis of molten iron tapped through a taphole.

Fig. 6 is a graph illustrating a temporal change of the molten iron slag balance. The time of Invention Example 1 illustrated in Fig. 6 is a time at which imaging of the discharge flow was performed as Invention Example 1. The time of Invention Example 2 is a time at which imaging of the discharge flow was performed as Invention Example 2.

As is clear from the temporal change of the molten iron slag balance, an amount of molten material accumulated in the lower portion of the furnace increases from the time of Invention Example 1 to the time of Invention Example 2. Accordingly, the height H of the molten material accumulated in the lower portion of the blast furnace is higher at the time of Invention Example 2 than at the time of Invention Example 1. The molten-material-height H detected by the molten-material-height detection method according to the present embodiment is also higher in Invention Example 2 than in Invention Example 1, as illustrated in Fig. 5, and therefore the same tendency is observed.

Next, the result of detection of the molten-material-height H illustrated in Fig. 5 was examined by using molten material height balance, and a result of the examination is described below. The molten material height balance is calculated from molten iron balance and molten slag balance. The molten iron balance is a value obtained by subtracting an amount of generated molten iron (t) from an amount of tapped molten iron (t) in target tapping, and the molten slag balance is a value obtained by subtracting an amount of generated molten slag (t) from an amount of tapped molten slag (t). In a case where values of these balances are negative, an amount of molten iron slag in the furnace increases, and in a case where values of these balances are positive, the amount of molten iron slag in the furnace decreases. Since these balances are expressed in weights (t), these balances can be converted into molten material height balance by dividing these balance values by a density and a hearth cross-sectional area. Specifically, the molten material height balance was calculated by using the molten iron balance, the molten slag balance, and the following formula (13). 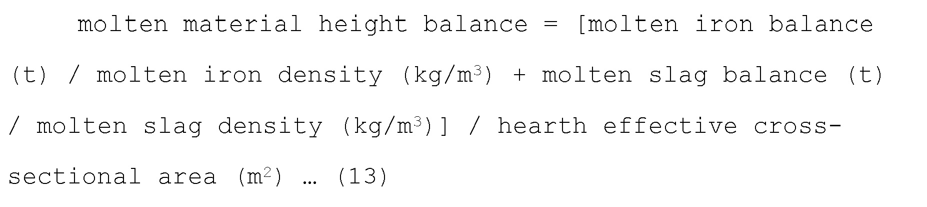 molten material height balance = [molten iron balance (t) / molten iron density (kg/m3) + molten slag balance (t) / molten slag density (kg/m3)] / hearth effective cross-sectional area (m2) (13)

Table 3 below shows the molten iron balance, the molten slag balance, and the molten-material-height calculated by using these balances at the time of Invention Example 1 and at the time of Invention Example 2 illustrated in Fig. 6. Note that the hearth effective cross-sectional area (m²) in the above formula (13) was calculated by multiplying a cross-sectional area of the lower portion of the furnace by a void fraction of the lower portion of the furnace, which was set to 0.35 on the basis of past records.

**[Table 3]**

| | Invention Example 1 | Invention Example 2 |
|---|---|---|
| Molten iron balance (t) | -285 | -693 |
| Molten slag balance (t) | 351 | 707 |
| Molten material height balance (m) | -0.89 | -2.52 |

As illustrated in Table 3, a difference in molten-material-height between the time of Invention Example 1 and the time of Invention Example 2 calculated from the molten material height balance was 1.63m (-0.89 - (-2.52) = 1.63). It has thus been revealed that a difference between the molten-material-height of the Invention Example 1 and the molten-material-height of the Invention Example 2 illustrated in Fig. 5 is almost same as this difference 1.63 m in molten-material-height calculated from the molten material height balance. This result has confirmed that a molten-material-height in a blast furnace can be detected with high accuracy by using the molten-material-height detection method according to the present embodiment.

### Reference Signs List

- 10: blast furnace
- 12: molten material
- 14: taphole
- 16: discharge flow
- 18: runner
- 20: liquid surface
- 30: object

## Claims

1. A molten-material-height detection method for detecting a molten-material-height in a smelting furnace (10) having, in a lower portion thereof, a tap hole (14) through which molten material (12) is discharged, the molten-material-height detection method comprising:
measuring a discharge distance of the molten material discharged through the tap hole;
calculating a discharge speed of the molten material discharged through the tap hole by using the discharge distance, a height of the tap hole, and a discharge angle of the molten material; and
detecting the molten-material-height by using the discharge speed, **characterized in that**
the height of the molten material is calculated by using the discharge speed Vₜₐₚ of the molten material and the following formula $\left(\frac{1}{2}\times {ρ}_{l}\times {{v}_{tap}}^{2}+{P}_{1}+{ρ}_{l}\times g\times H\right) - \left(\frac{1}{2}\times {ρ}_{l}\times {{v}_{tap}}^{2}+{P}_{2}+{ρ}_{l}\times g\times {h}_{tap}\right) = 0$
wherein in the above formula, ρₗ is a density (kg/m³) of the molten material, vₜₐₚ is the discharge speed (m/s) of the molten material, P₁ is a gas pressure (Pa) in the furnace, g is a gravitational acceleration (9.8 m/s²), H is a height (m) of the molten material accumulated in the lower portion of the furnace, P₂ is a gas pressure (Pa) at an exit of the taphole, and hₜₐₚ is the height (m) of the taphole.

2. The molten-material-height detection method according to claim 1, further comprising measuring the height of the tap hole.

3. The molten-material-height detection method according to claim 1 or 2, wherein
the molten-material-height is detected by using resistance force which the molten material receives from the discharge hole while being discharged through the tap hole and the discharge speed.

## Patentansprüche

1. Erfassungsverfahren für eine Höhe von geschmolzenem Material zum Erfassen einer Höhe von geschmolzenem Material in einem Schmelzofen (10), der in seinem unteren Abschnitt eine Ausgussausnehmung (14) aufweist, durch die geschmolzenes Material (12) abgegeben wird, wobei das Erfassungsverfahren für eine Höhe von geschmolzenem Material umfasst:
Messen einer Abgabedistanz des geschmolzenen Materials, das durch die Ausgussausnehmung abgegeben wird;
Berechnen einer Abgabegeschwindigkeit des geschmolzenen Materials, das durch die Ausgussausnehmung abgegeben wird, unter Verwendung der Abgabedistanz, einer Höhe der Ausgussausnehmung, und eines Abgabewinkels des geschmolzenen Materials; und
Erfassen der Höhe von geschmolzenem Material unter Verwendung der Abgabegeschwindigkeit, **dadurch gekennzeichnet, dass**
die Höhe des geschmolzenen Materials unter Verwendung der Abgabegeschwindigkeit Vₜₐₚ des geschmolzenen Materials und der folgenden Formel berechnet wird $\left(\frac{1}{2}\times {ρ}_{l}\times {V}_{tap}^{2}+{P}_{1}+{ρ}_{l}\times g\times H\right) - \left(\frac{1}{2}\times {ρ}_{l}\times {V}_{tap}^{2}+{P}_{2}+{ρ}_{l}\times g\times {h}_{tap}\right) = 0$
wobei in der obigen Formel ρ₁ eine Dichte (kg/m³) des geschmolzenen Materials, Vₜₐₚ die Abgabegeschwindigkeit (m/s) des geschmolzenen Materials, P₁ ein Gasdruck (Pa) im Ofen, g eine Erdbeschleunigung (9,8 m/s²), H eine Höhe (m) des im unteren Abschnitt des Ofens akkumulierten geschmolzenen Materials, P₂ ein Gasdruck (Pa) an einem Ausgang der Ausgussausnehmung und hₜₐₚ die Höhe (m) der Ausgussausnehmung ist.

2. Erfassungsverfahren für eine Höhe von geschmolzenem Material gemäß Anspruch 1, das ferner Messen der Höhe der Ausgussausnehmung umfasst.

3. Erfassungsverfahren für eine Höhe von geschmolzenem Material gemäß Anspruch 1 oder 2, wobei
die Höhe von geschmolzenem Material unter Verwendung von Widerstandskraft, die das geschmolzene Material von der Abgabeausnehmung erfährt, während es durch die Ausgussausnehmung abgegeben wird, und der Abgabegeschwindigkeit erfasst wird.

## Revendications

1. Procédé de détection de la hauteur d'un matériau fondu pour détecter une hauteur d'un matériau fondu dans un four de fusion (10) présentant, dans une partie inférieure de celui-ci, un trou de coulée (14) à travers lequel un matériau fondu (12) est déchargé, le procédé de détection de la hauteur d'un matériau fondu comprenant :
la mesure d'une distance de décharge du matériau fondu déchargé à travers le trou de coulée ;
le calcul d'une vitesse de décharge du matériau fondu déchargé à travers le trou de coulée en utilisant la distance de décharge, une hauteur du trou de coulée, et un angle de décharge du matériau fondu ; et
la détection de la hauteur d'un matériau fondu en utilisant la vitesse de décharge, **caractérisé en ce que**
la hauteur du matériau fondu est calculée en utilisant la vitesse de décharge Vₜₐₚ du matériau fondu et la formule suivante $\left(\frac{1}{2}\times {ρ}_{1}\times {{v}_{tap}}^{2}+{P}_{1}+{ρ}_{1}\times g\times H\right) - \left(\frac{1}{2}\times {ρ}_{1}\times {{v}_{tap}}^{2}+{P}_{2}+{ρ}_{1}\times g\times {h}_{tap}\right) = 0$
dans lequel, dans la formule ci-dessus, ρ₁ est une densité (kg/m³) du matériau fondu, vₜₐₚ est la vitesse de décharge (m/s) du matériau fondu, P₁ est une pression de gaz (Pa) dans le four, g est une accélération gravitationnelle (9,8 m/s²), H est une hauteur (m) du matériau fondu accumulé dans la partie inférieure du four, P₂ est une pression de gaz (Pa) à une sortie du trou de coulée, et hₜₐₚ est la hauteur (m) du trou de coulée.

2. Procédé de détection de la hauteur d'un matériau fondu selon la revendication 1, comprenant en outre la mesure de la hauteur du trou de coulée.

3. Procédé de détection de la hauteur d'un matériau fondu selon la revendication 1 ou la revendication 2, dans lequel
la hauteur d'un matériau fondu est détectée en utilisant la force de résistance que le matériau fondu reçoit du trou de décharge tout en étant déchargé à travers le trou de coulée et la vitesse de décharge.
